**Europäisches Patentamt**

**European Patent Office**

**Office européen des brevets**

(19)

(11) Numéro de publication : **0 485 253 A1**

(12) # DEMANDE DE BREVET EUROPEEN

(21) Numéro de dépôt : **91402836.0**

(22) Date de dépôt : **23.10.91**

(51) Int. Cl.⁵ : **G01S 13/93,** G05D 1/02

(30) Priorité : **09.11.90 FR 9013944**

(43) Date de publication de la demande :
**13.05.92 Bulletin 92/20**

(84) Etats contractants désignés :
**DE GB IT SE**

(71) Demandeur : **THOMSON-CSF
51, Esplanade du Général de Gaulle
F-92800 Puteaux (FR)**

(72) Inventeur : **Hardange, Jean-Philippe
THOMSON-CSF, SCPI, Cédex 67
F-92045 Paris la Défense (FR)**
Inventeur : **Petitdidier, Anne
THOMSON-CSF, SCPI, Cédex 67
F-92045 Paris la Défense (FR)**

(74) Mandataire : **Benoit, Monique et al
THOMSON-CSF SCPI
F-92045 PARIS LA DEFENSE CEDEX 67 (FR)**

(54) **Système radar en ondes millimétriques pour le guidage d'un robot mobile au sol.**

(57)     Le domaine de l'invention est celui des dispositifs de guidage embarqués sur des véhicules autonomes ou robots étant notamment amenés à circuler dans des environnements inaccessibles ou dangereux pour l'homme.

L'invention concerne un dispositif de détection d'environnement, de positionnement et/ou de guidage d'un véhicule autonome mobile au sol du type comprenant d'une part des moyens de génération et d'émission d'un signal pouvant être réfléchi par un obstacle fixe, et d'autre part des moyens de réception et de traitement du signal réfléchi par ledit obstacle fixe, lesdits moyens de traitement permettant la reconnaissance de l'environnement et/ou le guidage dudit véhicule mobile autonome, ledit signal émis étant un signal radar en ondes millimétriques, et lesdits moyens d'émission et de réception coopérant avec un dispositif d'antenne rotative en gisement sur 360°.

Fig. 2

EP 0 485 253 A1

Le domaine de l'invention est celui des dispositifs de guidage embarqués sur des véhicules autonomes ou robots, notamment du type amenés à circuler dans des environnements inaccessibles ou dangereux pour l'homme.

Dans le cas où l'environnement d'évolution du robot est encombré d'obstacles, il est nécessaire de l'équiper de dispositifs d'acquisition en temps réel ou quasi-réel d'informations relatives à cet environnement. Ces informations peuvent être soit bidimensionnelles soit tridimensionnelles et permettent au robot d'explorer ou de reconnaître son environnement, de se déplacer en évitant les obstacles et de prévoir sa trajectoire.

On connaît des capteurs du type optique (vidéo) ou acoustique, embarquables sur des robots autonomes, permettant d'acquérir des données relatives à l'environnement d'évolution des robots.

De tels capteurs peuvent par exemple consister en des télémètres lasers, des systèmes de vision stéréo, des systèmes de proximité ou anti-collision acoustiques ou infra-rouge, ou des systèmes de positionnement de type TRIDENT avec des balises ou de type GPS avec des satellites (noms protégés).

Les capteurs vidéo et acoustiques présentent l'avantage d'être d'un coût réduit, de présenter un très faible encombrement, une excellente résolution angulaire et un fort débit des données transmises au robot. Une bonne résolution angulaire permet à un système de traitement associé aux capteurs vidéo ou acoustiques de repérer des objets lointains, ou encore des objets proches de petite taille.

Cependant, les capteurs vidéo et les capteurs acoustiques présentent chacun des limitations prescrivant leur usage sur robot mobile au sol.

Les performances des capteurs vidéo présentent ainsi l'inconvénient de les rendre tributaires des conditions météorologiques et de l'environnement des mesures effectuées. On assiste notamment à une dégradation des qualités des capteurs vidéo en présence de nuages de poussière ou encore des différences notables de fiabilité des données envoyées, selon que ces capteurs vidéo sont utilisés de jour ou de nuit (capteur vidéo infra-rouge).

De plus, alors que par temps clair l'atténuation atmosphérique des données transmises par les capteurs optiques de jour ou de nuit (infra-rouge) est identique (de l'ordre de 0,2 dB/km), l'atténuation atmosphérique par temps de brouillard est très différente selon le type de capteur optique:
- capteur de jour:           atténuation = 150 dB/km;
- capteur infra-rouge:       atténuation = 100 dB/km.

Les capteurs optiques présentent ainsi l'inconvénient de ne pas pouvoir être utilisés en extérieur par tout temps, leurs caractéristiques étant trop dépendantes des conditions atmosphériques et de l'environnement d'utilisation.

Un autre inconvénient des capteurs vidéo est qu'ils ne présentent pas une conformité par rapport à une cartographie du sol. Il n'est ainsi pas possible d'utiliser de tels capteurs pour reconnaître une zone déjà précédemment explorée.

Les capteurs acoustiques passifs et actifs présentent pour leur part l'inconvénient majeur d'avoir une analyse en distance très limitée, si bien qu'ils ne peuvent être utilisés pour repérer des objets ou obstacles situés à une distance importante.

Enfin, tant les capteurs vidéo que les capteurs acoustiques en tant que tels ne peuvent directement effectuer des reconnaissances d'environnement, par exemple par rapport à une cartographie embarquée. Pour ce faire, ils doivent être associés à des algorithmes de reconnaissance de forme. Or, ce type de fonctionnalité requiert des moyens de calcul importants et encombrants, difficilement compatibles avec les exigences de compacité et de mobilité requises en applications embarquées.

La présente invention a notamment pour objectif de pallier ces inconvénients de l'état de la technique.

Plus précisément, un premier objectif de l'invention est de fournir un dispositif de détection d'environnement qui possède toutes les fonctionnalités particulières adaptées à un robot se déplaçant au sol. A cet égard, un objectif est de fournir des moyens susceptibles de détecter des obstacles à proximité immédiate du robot (notamment la surface et les accidents de surface de la piste de circulation du robot), par une vision quasi-tangentielle au plan de déplacement.

Un objectif complémentaire de la présente invention est de fournir un tel dispositif permettant une vision à 360°, impérative pour un robot au sol.

Un autre objectif de la présente invention est de fournir un tel dispositif ayant une portée importante.

Un objectif supplémentaire de la présente invention est de fournir un tel dispositif compatible avec les exigences de compacité et de mobilité d'un robot de taille réduite.

Un objectif complémentaire de la présente invention est qu'un tel dispositif fournisse des informations relatives au milieu d'évolution du robot selon deux dimensions (distance, circulaire) ou trois dimensions (distance, circulaire, élévation).

Un autre objectif de la présente invention est de fournir un tel dispositif présentant simultanément d'une part une résolution en distance indépendante de la distance à laquelle est détecté un obstacle et d'autre part une distance aveugle faible (la distance aveugle étant la distance en-deçà de laquelle les dispositifs de détection sont incapables de détecter efficacement un obstacle).

Un objectif complémentaire de la présente invention est de fournir un tel équipement de détection associé à des algorithmes puissants de traitement d'image permettant un recalage des informations de position provenant du radar.

Un objectif supplémentaire de la présente invention est de fournir un tel dispositif fonctionnant avec des signaux de faible puissance, de façon à limiter la consommation du robot.

Un autre objectif de la présente invention est de fournir un tel dispositif monté sur un robot dont le déplacement est commandable à distance.

Ces objectifs, ainsi que d'autres qui apparaîtront par la suite, sont atteints grâce à un dispositif de détection d'environnement, de positionnement et/ou de guidage d'un véhicule autonome mobile au sol du type comprenant d'une part des moyens de génération et d'émission d'un signal pouvant être réfléchi par un obstacle fixe, et d'autre part des moyens de réception et de traitement du signal réfléchi par ledit obstacle fixe, lesdits moyens de traitement permettant la reconnaissance de l'environnement et/ou le guidage dudit véhicule mobile autonome, ledit signal émis étant un signal radar en ondes millimétriques, et lesdits moyens d'émission et de réception coopérant avec un dispositif d'antenne rotative en gisement sur 360°.

Avantageusement, ledit signal radar en ondes millimétriques est un signal hyperfréquence continu modulé en fréquence (système FM-CW).

Ainsi, une caractéristique essentielle de la présente invention est d'utiliser un radar à ondes millimétriques dans la bande W au lieu des capteurs optiques et infra-rouge essentiellement utilisés jusqu'à présent. La longueur d'onde des signaux émis et reçus est ainsi comprise entre 3 et 9 mm. Une émission/réception de signaux en bande W présente notamment l'avantage de présenter une atténuation atmosphérique constante, que ce soit par temps clair ou par temps de brouillard (0,2 dB/km).

L'originalité tient au domaine d'application nouveau pour les radars (robot au sol) et aux adaptations nécessaires correspondantes. De façon classique, notamment en utilisation aérienne, les radars ont en effet plutôt pour fonction de détecter des obstacles lointains et de taille importante, et non pas de détecter des petits obstacles proches. En outre, on tolère généralement une distance aveugle importante dans les applications traditionnelles et le champ de vision est un champ réduit, limité le plus souvent à quelques degrés d'angle d'ouverture autour de la ligne de trajectoire.

Préférentiellement, lesdits moyens de réception comprennent des moyens de correction de gain lui permettant de détecter simultanément des obstacles proches et des obstacles lointains.

Avantageusement, lesdits moyens de correction de gain sont des moyens analogiques placés en amont d'un convertisseur analogique/numérique.

De préférence, lesdits moyens de correction de gain comportent un premier soustracteur recevant d'une part le signal en provenance desdits moyens de réception et d'autre part ce même signal retardé d'un temps égal à la période d'échantillonnage dudit convertisseur analogique/numérique, un second soustracteur recevant d'une part le signal de sortie dudit premier soustracteur et d'autre part ce même signal retardé d'un temps égal à ladite période d'échantillonnage dudit convertisseur analogique/numérique, la sortie dudit second soustracteur alimentant ledit convertisseur analogique/numérique.

De préférence, ledit dispositif d'antenne rotative est constitué de deux antennes dont l'ouverture en élévation est d'environ 10° et l'ouverture en circulaire est d'environ 1,5°.

Avantageusement, lesdites antennes sont de type "Pillbox" fixées l'une sur l'autre afin d'éviter des fuites d'émission.

Préférentiellement, ledit dispositif d'antenne rotative est fixé sur un plan situé le plus haut possible sur ledit véhicule autonome mobile notamment sur un bras téléscopique.

Selon un mode de mise en oeuvre préférentiel de la présente invention, lesdits moyens de traitement sont déportés par rapport audit véhicule mobile et communiquent avec ledit véhicule par liaison hertzienne.

De cette façon, on rend compatibles les exigences de compacité et de mobilité du robot avec la forte capacité de calcul nécessaire aux fonctions de reconnaissance d'environnement et de guidage.

Avantageusement ledit signal réfléchi est mémorisé et transmis auxdits moyens de traitement après chaque révolution complète dudit dispositif d'antenne rotative.

De préférence, lesdits moyens de traitement comprennent des moyens délivrant une cartographie de l'environnement dans lequel se trouve ledit véhicule mobile autonome, en donnant pour chaque point de l'environnement observé un signal dont le niveau est représentatif de la surface équivalente radar du terrain ou des objets situés en ce point.

Avantageusement, lesdits moyens de traitement utilisent des algorithmes de traitement d'image permettant de visualiser les données provenant dudit véhicule mobile autonome sur un écran de visualisation sous forme d'un paysage en deux ou trois dimensions.

De préférence, lesdits algorithmes de traitement d'image effectuent un recalage de l'image transmise par ledit véhicule mobile autonome avec une image précédemment enregistrée ou avec une carte géographique.

Avantageusement, ledit véhicule mobile autonome est télécommandé par liaison hertzienne.

Préférentiellement, ledit véhicule autonome mobile au sol est un robot tout terrain équipé de roues et/ou de chenilles.

Une telle configuration permet d'utiliser le véhicule autonome mobile au sol à l'extérieur et sur des terrains accidentés.

D'autres caractéristiques et avantages de la présente invention apparaîtront à la lecture de la description suivante d'un mode de réalisation préférentiel de l'invention, donné à titre explicatif et non limitatif, et des dessins annexés, dans lesquels:

– les figures 1A, 1B et 1C représentent le principe d'un système radar FM-CW mis en oeuvre dans la présente invention;

– la figure 2 représente un schéma synoptique d'une partie du dispositif de guidage selon l'invention, destiné à être embarqué sur un véhicule autonome.

– la figure 3 représente la variation de la puissance admise dans les moyens de réception du dispositif en fonction de la distance de l'obstacle détecté et pour trois modes de réalisation différents de l'invention;

– la figure 4 représente les moyens de correction de gain utilisés dans la présente invention, correspondant à un filtre à simple annulation;

– la figure 5 est un schéma-blocs des moyens de correction de gain utilisés dans la présente invention;

– la figure 6 est une vue de dessus d'une des deux antennes montées en "Pillbox" utilisées dans la présente invention;

– la figure 7 est une coupe agrandie de la figure 6.

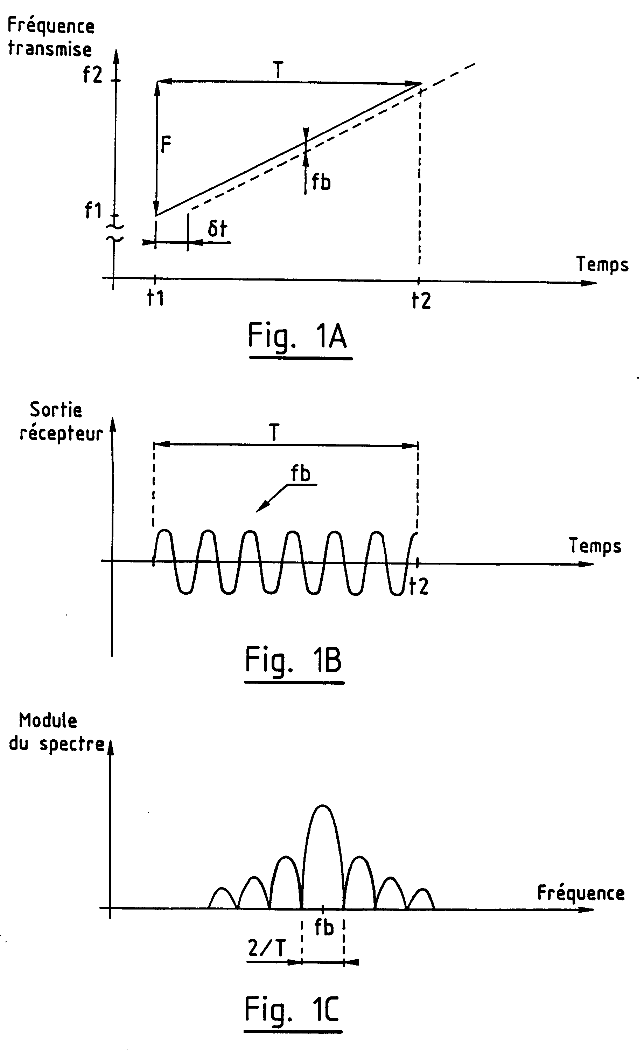

Les figures 1A, 1B et 1C représentent le principe d'un système radar FM-CW mis en oeuvre dans la présente invention.

Un système radar FM-CW comprend une antenne d'émission d'un signal hyperfréquence destiné à être réfléchi par un obstacle. Le signal transmis est une onde continue modulée en fréquence. Le signal réfléchi est capté par une antenne de réception. Lorsque l'onde est réfléchie par un obstacle, le système de traitement du radar va mesurer le laps de temps que met l'onde hyperfréquence pour revenir jusqu'à l'antenne de réception. Pendant ce laps de temps, la fréquence du signal transmis change, si bien qu'au moment de la réception, les signaux reçus et transmis ont des fréquences différentes. Cette différence de fréquence est appelée fréquence de battement. Comme la fréquence de battement dépend du temps de trajet de l'onde hyperfréquence, elle dépend de la distance de l'obstacle.

La figure 1A représente ce principe. L'onde hyperfréquence émise est modulée linéairement en fréquence entre deux fréquences $f_1$ et $f_2$. L'excursion de fréquence du signal transmis est égale à F. Le signal de modulation est de fréquence $f_1$ à un temps $t_1$ et atteint la fréquence $f_2$ à un temps $t_2$. La période de modulation est donc égale à $T = t_2 - t_1$.

Le signal transmis est représenté en traits pleins. Si ce signal rencontre un obstacle, il est réfléchi en direction d'une antenne de réception où il arrive avec un décalage de temps $\delta t$ (traits pointillés). Pendant ce temps, la fréquence du signal de modulation a augmenté de $f_b$. Si l'excursion de fréquence de modulation F est importante par rapport à la période de modulation T, la fréquence de battement $f_b$ reste constante pendant le temps $T - \delta t$. En injectant le signal émis et le signal réfléchi dans un mélangeur et en éliminant le signal haute fréquence, par exemple à l'aide d'un filtre passe-bas, on obtient la fréquence de battement $f_b$ représentée à la figure 1B. La fréquence de battement $f_b$ est proportionnelle à la distance R séparant le système radar de l'obstacle:

$$f_b = F.\delta t/T = 2.F.R/(c.T)$$

où c est la vitesse de la lumière (= $3.10^8$ m/s).

La fréquence de battement $f_b$ est donc d'autant plus importante que l'obstacle réfléchissant est lointain.

Afin de mesurer avec précision la distance de l'obstacle, il est nécessaire de dériver le signal de battement de la figure 1B. Pour cela, une Transformée de Fourier Rapide (FFT) peut être appliquée au signal de battement.

La figure 1C montre l'amplitude du signal mélangé puis filtré, dans le domaine fréquentiel. Le module du spectre est centré sur la fréquence $f_b$ et la bande de fréquence sans les harmoniques vaut 2/T.

La fréquence de battement $f_{bmax}$ maximale vaut, d'après le critère de Nyquist: $f_{bmax} = 0,5.f_e$ où $f_e$ est la fréquence d'échantillonage. La distance maximale $R_{max}$ à laquelle peut être détecté un obstacle est donc donnée par:

$$R_{max} = c.T.f_{bmax}/(2.F)$$
$$= N.c/(4.F)$$

où N est le nombre d'échantillons pris pendant la période T.

La résolution r du système radar est alors donnée par:

$$r = c/(2.F) \quad (1)$$

La résolution du système radar est donc inversement proportionnelle à l'excursion en fréquence du signal de modulation.

Pour mettre en oeuvre un radar de type FM-CW dans l'application spécifique de l'invention, à savoir le guidage d'un robot au sol, les inventeurs ont observé un paramétrage spécifique. Ce paramétrage peut par exemple être défini par différence par rapport à celle des radars aéroportés, aussi appelés radars de cartographie, classiques.

Les radars de cartographie classiques présentent l'inconvénient d'avoir une distance aveugle proportionnelle à la durée des impulsions envoyées par leurs antennes d'émission/réception. En effet, si le début d'une impulsion envoyée (par exemple le front montant de l'impulsion) est réfléchi, notamment par un obstacle proche, et reçu par l'antenne d'émission/réception avant que la fin de l'impulsion ne soit envoyée (en l'occurence, le front descendant de l'impulsion), le radar à impulsion ne pourra pas correctement détecter cet obstacle. C'est pourquoi les impulsions envoyées doivent être de durée très courte, afin de limiter au maximum la distance aveugle. Cependant, cette durée ne peut être diminuée autant qu'on le souhaiterait, d'une part pour des raisons technologiques, et d'autre part parce qu'il est important d'avoir une puissance moyenne d'impulsion suffisante pour pouvoir détecter des obstacles plus lointains. En effet, si la puissance moyenne d'une impulsion diminue, le rapport signal sur bruit diminue et il n'est plus possible de détecter des obstacles lointains, le bruit de fond masquant l'écho.

La présente invention propose au contraire d'utiliser une onde millimétrique modulée linéairement en fréquence (principe FM-CW). La distance aveugle s'en trouve considérablement réduite puisqu'elle dépend d'une excursion en fréquence F de l'ordre de 75 MHz, selon un mode de réalisation préférentiel de la présente invention.

De plus, selon l'invention, l'ouverture en rotation et en site des antennes est optimisée pour que le robot se déplaçant au sol ait à la fois une vision très précise dans un plan parallèle à son plan de déplacement et également tout autour de lui (à 360°).

Afin de permettre le guidage d'un robot mobile, il est nécessaire de disposer de deux fonctions: une fonction de pilotage et une fonction de positionnement.

La fonction de pilotage nécessite la fourniture d'une image d'une zone du sol présentant une cadence de renouvellement et un domaine exploré compatibles avec la vitesse de déplacement du robot et le temps de réaction du pilote.

La fonction de positionnement nécessite la fourniture d'une image d'une zone du sol géométriquement conforme, c'est à dire correspondant à une image précédemment enregistrée ou à une carte géographique, positionnée de façon précise par rapport au robot. Cette image doit être suffisamment grande pour contenir les amers nécessaires à l'obtention de la précision de recalage requise, les amers étant définis comme des obstacles dépassant de l'horizon qui sont évitables ou repérables.

Ces deux fonctions sont remplies, selon la présente invention, grâce à un dispositif de guidage et de positionnement comprenant d'une part un dispositif radar monté sur un robot mobile se déplaçant au sol, et d'autre part des moyens de traitement assurant simultanément le traitement et la visualisation des signaux radar ainsi que le positionnement du robot autonome mobile.

Le principe du positionnement met en oeuvre des dispositifs de recalage automatique. Ces dispositifs sont du type employé dans le domaine des radars aéroportés pour permettre la navigation, c'est à dire pour connaître à chaque instant la position de l'avion. Le principe de fonctionnement des radars aéroportés est basé sur l'émission et la réception d'impulsions de courte durée, généralement dans le domaine des ondes centimétriques (fréquences supérieures à 5 GHz). La reconnaissance d'un site ou d'un environnement est réalisée grâce à des algorithmes de traitement d'images, essentiellement des algorithmes de corrélation de l'information reçue par le radar avec une carte géographique ou avec une autre carte radar précédemment enregistrée. Ces algorithmes indiquent par comparaison des deux images s'il y a translation et/ou rotation d'une carte par rapport à l'autre et permettent ainsi de se repositionner. Ce repositionnement ou encore recalage est effectué à intervalles de temps rapprochés, réguliers ou non. L'écart entre deux recalages dépend du système et peut varier de 50 ms à 15 minutes environ.

Le principal avantage des radars de cartographie est la conformité de la zone observée avec par exemple celle précédemment enregistrée. De plus, ces radars font appel à des algorithmes de traitement d'image très élaborés, assurant un recalage très précis de la position exacte de l'avion par rapport à son environnement.

Cependant, les moyens de traitement comportant ces algorithmes sont de taille très importante et leur encombrement ne les prête pas à un montage sur un robot mobile au sol, devant pouvoir se déplacer aisément tout en évitant des obstacles.

C'est pourquoi, selon l'invention, les moyens de traitement communiquent préférentiellement avec le dispositif radar par liaison hertzienne et sont déportés dans un site pouvant être très éloigné du robot.

La déportation des moyens de traitement permet de mettre en oeuvre des moyens de traitement encombrants que l'on ne pourrait pas monter sur le robot (algorithmes de recalage, mémoires contenant des données relatives à un environnement déjà connu, ...).

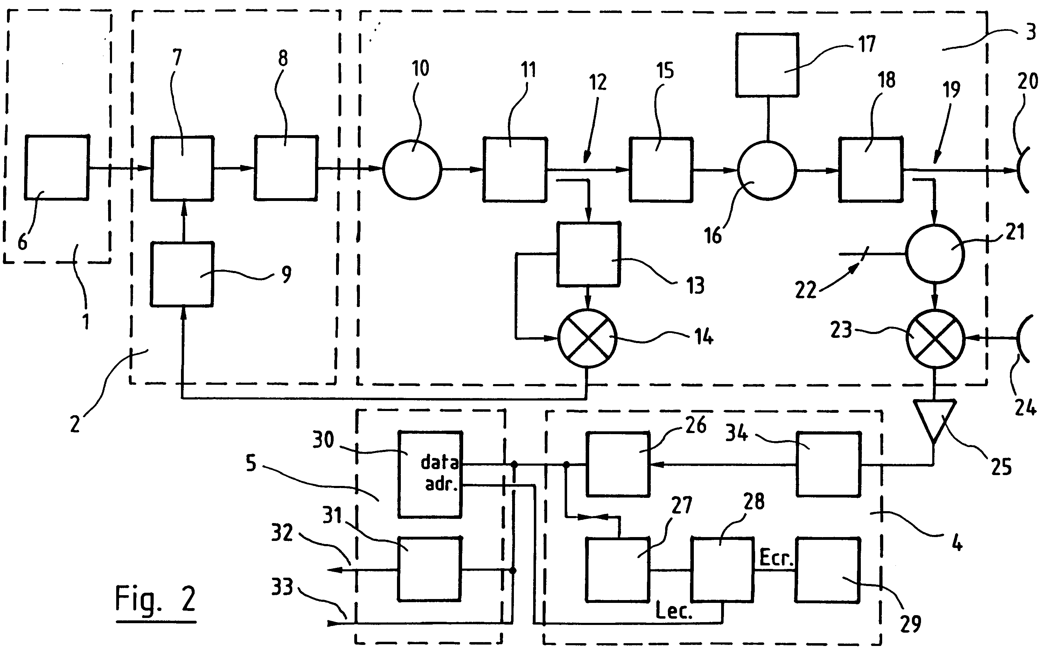

La figure 2 représente un schéma synoptique d'une partie du dispositif de guidage selon l'invention, destiné à être embarqué sur un véhicule autonome.

La partie embarquée représentée tourne sur elle-même à la vitesse derotation de 0,1 tour par seconde et transmet, par liaison hertzienne, à la partie déportée, située dans un abri ou un local, les données relatives aux obstacles qu'elle détecte. Le débit maximal de la liaison hertzienne est, selon l'invention, de l'ordre de 500 kBauds. La partie déportée mémorise les données puis effectue le traitement en différé, et donne une représentation de la zone observée sur un moniteur. Bien entendu, d'autres applications sont possibles, et l'on peut notamment prévoir des interfaces avec l'extérieur.

La figure 2 représente cinq modules 1,2,3,4 et 5 de génération et de prétraitement des signaux émis et reçus respectivement par des antennes 20 et 24.

Le module 1 est constitué d'un générateur 6 numérique d'une rampe de modulation du signal sinusoidal transmis. La résolution en distance dépend de la largeur de bande du signal transmis (relation 1). Selon un mode de réalisation de l'invention, la largeur de bande est égale à 75 MHz, ce qui correspond à une résolution en distance de 2 mètres. Bien entendu, la largeur de bande peut être augmentée ou diminuée, selon la résolution recherchée. La rampe est fournie au module 2 de bouclage de phase analogique assurant la génération d'une rampe de modulation de fréquence d'un oscillateur Gunn 10, l'asservissement de cette rampe et la commande de l'oscillateur Gunn. La largeur de bande du signal modulé transmis dépend de la résolution en distance souhaitée (relation (1)). Le module 2 comprend ainsi un préamplificateur d'asservissement 7, un amplificateur de courant 8 de commande de l'oscillateur Gunn 10 et une boucle de retour comprenant un système d'asservissement de fréquence 9.

Le module 3 est constitué par une platine d'émission/réception située dans une enceinte thermostatée. Les éléments hyperfréquence constituant ce module fonctionnent en bande W et sont reliés entre eux par des guides d'ondes millimétriques. Le module 3 comprend l'oscillateur Gunn 10, par exemple constitué par une diode Gunn, suivi par un jeu d'isolateurs 11,15 séparés par un coupleur 12. Le coupleur 12 permet un rebouclage du signal hyperfréquence vers le module 2, à travers un té 3 dB 13 et un mélangeur 14. La sortie de l'isolateur 15 est reliée à un circulateur 16, raccordé d'une part à un élément oscillateur 17 constitué par une diode IMPATT alimentée, et d'autre part à un isolateur 18. La sortie de l'isolateur 18 est reliée à une antenne d'émission 20. L'antenne 20 émet une onde hyperfréquence porteuse du signal sinusoidal modulé en fréquence. Une partie du signal sortant de l'isolateur 18 est prélevée par un coupleur 19 et passe dans un circulateur 21 comportant un court-circuit ajustable 22. Le signal sortant du circulateur 21 entre dans un mélangeur 23 également raccordé à l'antenne de réception 24 du signal réfléchi par un obstacle. Le mélangeur 23 effectue le mélange entre la rampe de fréquence émise et le signal reçu. Le signal provenant du mélangeur 23 est amplifié par un préamplificateur vidéo 25 et fournit à un premier module de prétraitement 4.

Le module de prétraitement 4 est un module de codage comprenant des moyens 34 de correction de gain, dont la fonction sera expliquée par la suite, un circuit d'échantillonnage de 1 MHz 26 (12 bits de codage), une mémoire RAM 27 de mémorisation du signal radar, un circuit 28 de gestion des adresses et un compteur d'écriture 29. Le module de codage 4 communique avec le module 5 assurant la gestion des données. Ce module comprend un microprocesseur 8 bits 30 qui communique avec la mémoire RAM 27 et le circuit de gestion des adresses 28, et un ACIA ("Asynchronous Communication Interface Adaptor" (adaptateur d'interface pour communication asynchrone)) 31. Le module 5 assure notamment le transfert des données radar vers la partie déportée, à un débit maximal de 500 kBauds, grâce à la liaison hertzienne 32.

La transmission de données entre le robot comprenant le radar et la partie déportée peut également être effectuée par câble ou par fibre optique. La nature de cette transmission de données n'a pas d'influence sur le radar, au-delà du module 5 de gestion des données.

Le conditionnement de la partie embarquée est assuré par conduction sur les parois métalliques d'un coffret renfermant les divers éléments décrits, un ventilateur brassant l'air à l'intérieur de l'enceinte.

Les alimentations fournissant les tensions de fonctionnement des éléments sont classiques.

Les antennes 20 et 24 peuvent également être remplacées par une antenne unique d'émission/réception associée à un duplexeur et à un dispositif de traitement approprié.

Un mode de mise en oeuvre avantageux de la présente invention consiste à utiliser deux antennes 20 et 24 distinctes et superposées afin d'éviter des fuites d'émission (montage "Pillbox"). L'onde hyperfréquence servant de porteuse à l'onde transmise a une fréquence supérieure ou égale à 30 GHz (onde millimétrique) et de préférence égale à 94 GHz.

Les antennes 20 et 24 sont avantageusement des antennes paraboliques d'ouverture en circulaire de 1,5° et de 10° en élévation. Leur gain est de 35 dB environ et leur T.O.S. (Taux d'Ondes Stationnaires) est voisin de 2.

L'ouverture de 10° en élévation permet de détecter des obstacles au sol proches et également des obstacles pouvant être suspendus au-dessus du robot. Cette ouverture en élévation est avantageusement répartie également de part et d'autre d'un plan parallèle au plan de circulation du robot.

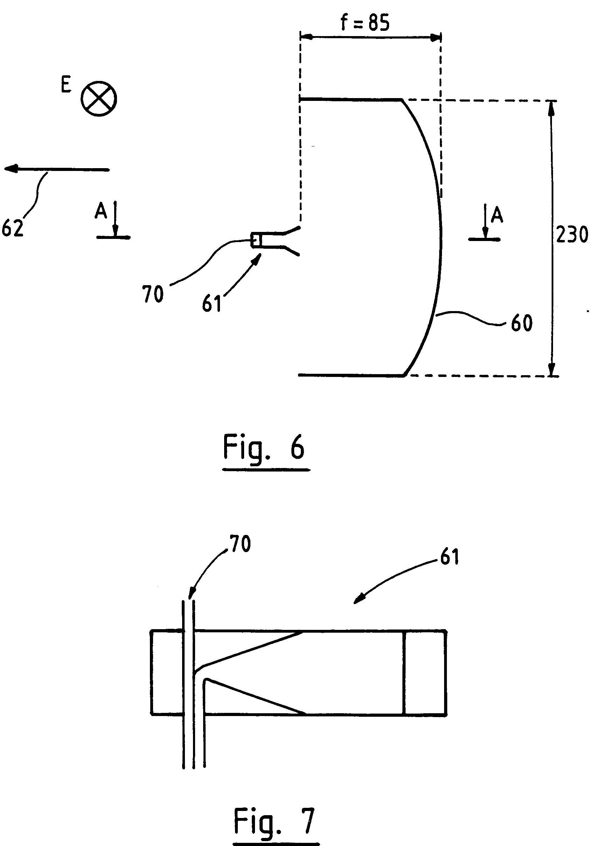

La figure 6 représente une vue de dessus de l'antenne inférieure.

Les antennes d'émission et de réception sont identiques et composées d'un réflecteur cylindrique 60 éclairé par une source primaire de type cornet 61 (antenne "Pillbox"). Les deux antennes rayonnent dans la même direction 62. On peut signaler à titre indicatif que leur focale est de 85 mm et leur largeur de 230 mm.

La figure 7 représente une coupe agrandie selon AA de la figure 6.

L'antenne inférieure 61 est placée immédiatement sous l'antenne supérieure non représentée. Pour alimenter l'antenne supérieure, un guide d'ondes 70 traverse verticalement l'antenne inférieure 61. Le guide d'ondes 70 est masqué par le cornet de l'antenne 61 et ne perturbe donc pas le diagramme de rayonnement de l'antenne inférieure 61.

Les antennes sont placées sur l'ensemble radar et l'ensemble est mobile en circulaire. Un tel montage permet de s'affranchir de l'utilisation d'un joint hyperfréquence tournant. Les seuls signaux transitant entre la partie fixée au robot et la partie mobile sont des alimentations basse tension et des données numériques.

Le radar peut être fixé soit sur un plan situé le plus haut possible sur le robot, soit à l'extrémité d'un bras téléscopique pouvant se déployer en hauteur pour améliorer la vision du sol à grande distance. Comme la puissance rétrodiffusée par le sol est d'autant plus faible que la visée est rasante, on a intérêt à placer l'antenne le plus haut possible.

La partie embarquée est avantageusement montée sur un plateau tournant en gisement sur le robot, le plateau étant entraîné par un moteur. Un codeur optique permet de connaître la position angulaire exacte du plateau. Ce codeur optique est raccordé au bus de données 33 du module 5. Selon l'invention, la partie embarquée tourne en gisement à la vitesse de 0,1 tour par seconde. Le radar effectue donc une rotation complète en 10 secondes. Avantageusement, le radar effectue une observation de son environnement pour chaque degré de rotation, c'est à dire que toutes les dix secondes, 360 mesures sont effectuées. Chaque tour d'antenne est mémorisé dans la RAM 27 avant d'être envoyé à la partie déportée, par exemple par liaison hertzienne.

Comme l'ouverture des antennes en circulaire est de 1,5°, il y a recouvrement partiel des données enregistrées. Ce recouvrement partiel permet notamment d'éviter tout décalage des données transmises, par exemple dû à un positionnement relatif des antennes pas assez précis par rapport à leur position précédente.

Etant donné que le module de codage 4 échantillonne à 1 MHz les données provenant des moyens 34 de correction de gain et code ces données sur 12 bits, la capacité mémoire de la RAM 27 doit être de 2 Mbits (= 360° x 512 x 12 bits) pour un tour d'antenne. Le module de gestion 5 de la partie embarquée déclenche le début de l'enregistrement d'une récurrence dès que le microprocesseur 30 détecte une incrémentation du codeur optique de 1 degré. Chaque récurence a une durée de 512 μs. Cette incrémentation provoque également l'émission d'une rampe de fréquence. Le module de gestion 5 assure également le transfert des données radar mémorisées dans la RAM 27 de la partie embarquée vers la partie déportée via l'ACIA 31.

Le dispositif selon l'invention comprend avantageusement des moyens 34 de correction de gain, faisant once de GVT (Gain Variable dans le Temps). De tels moyens 34 de correction de gain permettent au radar de visualiser simultanément des échos à des distances très courtes (quelques mètres) et à des distances importantes pour ce type de radar (500 m et plus).

Dans un radar à impulsions, contrairement à ce qui se passe pour un radar continu du type de l'invention, les échos proches et les échos lointains sont séparés dans le temps, du fait du temps de propagation des impulsions hyperfréquences. Pour que les échos provenant des obstacles proches aient la même amplitude que celle des échos provenant d'obstacles lointains, il faut diminuer le gain au début de la période de réception pour réduire la dynamique des échos reçus. La valeur du gain pendant la période de réception varie de manière continue en fonction du temps pour compenser au mieux l'effet de la variation de puissance des échos reçus variant en $D^{-4}$ et de la loi d'éclairement de l'antenne en site.

En revanche, il n'est pas possible d'utiliser de tels moyens dans un radar continu du type de l'invention, puisque tous les échos sont présents simultanément dans le récepteur, quelque soit leur distance. Une variation de gain du récepteur pendant la période de réception n'a donc aucune efficacité pour réduire la dynamique des échos reçus.

Selon l'invention, les moyens 34 assurant une variation de gain dans le temps exploitent le fait qu'après mélange du signal reçu et du signal émis, la fréquence de battement résultante est nulle à l'origine et proportionnelle à la distance de l'obstacle.

Selon un premier mode de réalisation, les moyens 34 de réduction de la dynamique correspondent à un filtre de simple annulation, c'est à dire qu'ils remplissent la même fonction en analogique qu'un filtre de simple annulation en numérique. Un tel filtre effectue l'opération suivante, d'un échantillon à l'autre de la même récurrence:

$$s_n = e_{n-1} - e_n$$

où:

- $s_n$ est la valeur de sortie de l'échantillon
- $e_n$ est la valeur d'entrée de l'échantillon
- $e_{n-1}$ est la valeur de l'échantillon précédent

Ce type de filtre est connu dans le domaine des radars Doppler où il est utilisé pour éliminer les échos fixes, c'est à dire les échos de fréquence Doppler nulle ou quasi-nulle, constitués généralement par les échos de sol. Par analogie, il est ici utilisé dans le cas d'un radar continu (FM-CW) pour atténuer les fréquences de battement nulles correspondant aux distances proches.

Dans un radar Doppler, le filtre traite des échantillons situés dans une même case de distance, mais dans des récurrences successives. Selon l'invention, il prend en compte des échantillons successifs d'une même récurrence, c'est à dire que l'antenne de réception reçoit plusieurs informations pour chacune de ses positions.

Les opérations mathématiques suivantes permettent d'illustrer le fonctionnement du filtre de simple annulation utilisé selon un mode de réalisation de l'invention.

En considérant comme l'origine des temps l'instant d'émission du début de la rampe de fréquence, le signal s(t) issu du filtre à l'instant t peut être considéré comme une fonction de deux variables n et $\alpha$:

$$s(t) = s_n(\alpha), \text{ avec } t = (n + \alpha).t_e$$

où:

- $t_e$ est la période de l'échantillonnage (1 µs) du convertisseur analogique/numérique 26
- n est un nombre entier variant entre 0 et N-1
- N est le nombre d'échantillons de signal pris en compte par récurrence (N = 512)
- $\alpha$ est un nombre réel compris dans l'intervalle [0,1[

Le filtre de simple annulation réalise l'opération suivante:

$$
\begin{aligned}
s_n(\alpha) &= e_{n-1}(\alpha) - e_n(\alpha) \\
&= A \cos\left[2\pi f_b (n+1+\alpha)t_e + \Phi_0\right] - A \cos\left[2\pi f_b (n+\alpha)t_e + \Phi_0\right] \\
&= 2 A \sin(\pi f_b t_e).\sin\left[2\pi(n+\alpha)f_b t_e + \pi f_b t_e + \Phi_0\right]
\end{aligned}
$$

avec:

- $f_b$ est la fréquence de battement, comprise entre 0 et $f_e/2$
- $f_e$ est la fréquence d'échantillonnage = $1/t_e$
- $\Phi_0$ est la phase initiale et peut être quelconque
- A est l'amplitude du signal

On constate que $s_n(\alpha)$ est le produit de deux termes:

- $2 \sin(\pi f_b t_e)$ qui ne dépend que de la distance de l'obstacle
- $A \sin[2\pi(n+\alpha)f_b t_e + \pi f_b t_e + \Phi_0]$ qui est un signal sinusoidal variant en fonction de l'indice n. Sa puissance moyenne est égale à $A^2/2$.

Un signal de puissance $A^2/2$ avant le filtre aura en sortie du filtre une puissance valant:

$$2 A^2 \sin^2 \pi f_b t_e$$

Cette valeur détermine le gabarit du filtre à utiliser pour distinguer les échos proches des échos lointains.

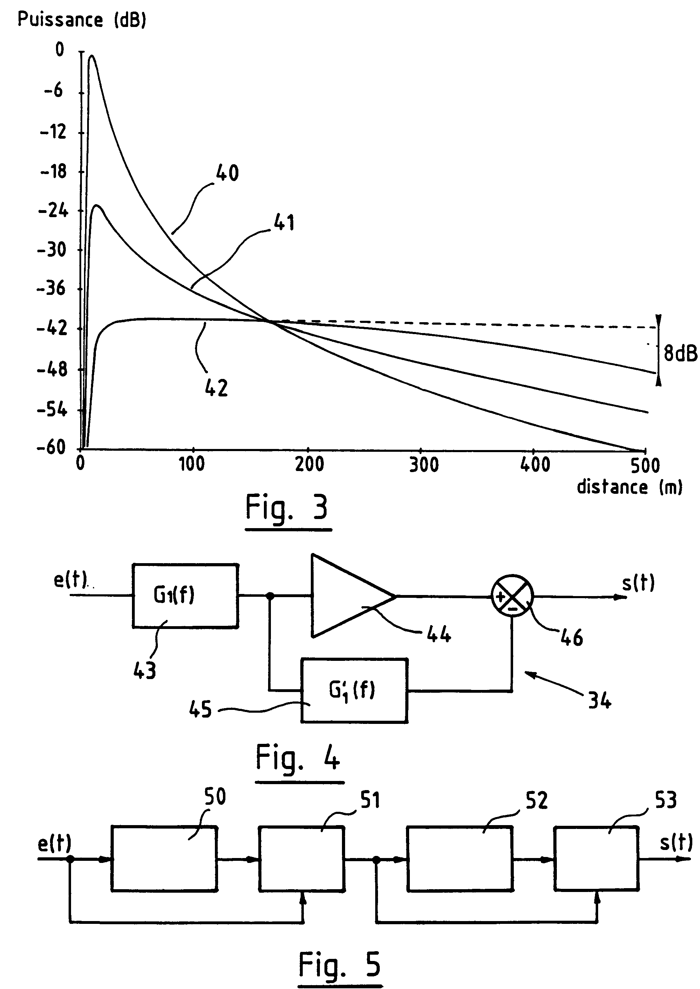

La figure 4 représente les moyens de correction de gain utilisés dans la présente invention, correspondant à un filtre de simple annulation.

Le signal e(t) est celui issu de l'amplificateur vidéo 25 (fig.2). Ce signal est injecté à un module 43 de gain $G_1(f)$. Le signal de sortie du module 43 est fourni à un amplificateur 44 et à un second module 45 de gain $G'_1(f)$. Le signal amplifié sortant du module 45 est soustrait de celui provenant de l'amplificateur 44 par un soustracteur 46 et l'on obtient ainsi le signal de sortie s(t).

Les modules 43 et 45 ont des gains qui sont fonction de la fréquence du signal s(t) et correspondent au gabarit du filtre utilisé.

Selon un deuxième mode de réalisation de l'invention, le filtre utilisé est un filtre de double annulation effec-

tuant l'opération suivante:

$$s_n = e_{n-2} - 2\,e_{n-1} + e_n$$

Ce mode de réalisation constitue un mode de réalisation préférentiel de l'invention, pour les raisons exposées ultérieurement en regard de la figure 3.

Il est également possible d'effectuer une correction du gain à postériori, après le traitement par FFT, une fois que les échos sont séparés en distance. Ce traitement améliore la qualité de la carte radar, mais n'évite pas la saturation du convertisseur analogique/numérique 26 (fig.2), due à un niveau de signal reçu trop important, ni un phénomène de masquage: en effet, lorsqu'on effectue une FFT, on introduit des lobes secondaires et les échos provenant d'obstacles proches auront un niveau plus important que les échos provenant d'obstacles lointains. Les échos faibles, provenant d'obstacles lointains, sont alors masqués par les lobes secondaires des échos puissants en sortie de FFT.

La figure 5 est un schéma-blocs des moyens de correction de gain utilisés dans la présente invention.

Comme précisé précédemment, le principe des filtres à simple ou double annulation est utilisé pour compenser les atténuations dues au milieu de transmission. La figure 5 représente le principe d'un filtre à double annulation réalisé en analogique.

Un signal e(t) analogique est envoyé dans un circuit 50 constitué par une ligne à retard de bande passante $f_{bmax}$ (500 kHz) et provoquant un retard de durée $t_e$ (1 µs). La sortie de la ligne à retard présente une donnée $e(t-t_e)$. Une telle ligne à retard peut notamment être du type "à constantes réparties", c'est à dire constituée par la mise en série de circuits passifs de type LC. La sortie et l'entrée de la ligne à retard 50 sont reliées aux deux entrées d'un soustracteur analogique 51. La sortie du soustracteur 51 présente donc une donnée $e(t-t_e) - e(t)$.

Il est à signaler que le circuit jusqu'ici décrit est celui d'un filtre à simple annulation, puisque la sortie du soustracteur 51 est égale à $e(t-t_e) - e(t)$.

Le signal de sortie du soustracteur 51 est admis dans un second ensemble ligne à retard 52/soustracteur 53. Le signal s(t) sortant du soustracteur 53 est égal à: $s(t) = e(t-2t_e) - 2e(t-t_e) + e(t)$.

Le filtre de simple ou double annulation, en atténuant les échos proches, élimine également la fuite d'émission. La fuite d'émission est le signal reçu directement par l'antenne de réception, du fait d'un mauvais découplage entre les deux antennes.

Toutefois, un tel filtre n'a aucun effet de réduction du bruit porté par l'émission, un bruit étant caractérisé par un spectre de fréquence très étendu. La sensibilité du récepteur reste limitée par le niveau du bruit parvenant par la fuite d'émission. Il faut bien sûr dimensionner le découplage des antennes et la pureté spectrale de l'émission de façon que ce bruit soit rejeté sous le bruit thermique du récepteur.

La figure 3 représente la valeur de la puissance entrant dans le convertisseur analogique/numérique en fonction de la distance d'un écho, selon trois configurations de l'invention.

Les trois courbes 40,41 et 42 représentées figurent dans un repère dont l'axe des abscisses est gradué en mètres (distance de laquelle proviennent les échos) et l'axe des ordonnées en dB.

La courbe 40 représente la puissance reçue sans moyens de filtrage. On constate que pour un obstacle proche la puissance reçue est beaucoup plus importante que pour un obstacle lointain. Cette courbe 40 a une allure en $D^{-4}$.

La courbe 41 représente la puissance reçue avec un filtre correspondant à un filtre de simple annulation, du type représenté à la figure 4. Pour des obstacles proches, cette puissance est déjà considérablement réduite par rapport au cas de la courbe 40 et on observe donc une dynamique plus faible.

La courbe 42 représente la puissance reçue avec un filtre correspondant à un filtre de double annulation. La réponse est très plate pour les distances comprises entre 10 et 500 mètres, la dynamique résiduelle liée à la variation de distance étant de 8 dB, au lieu de:

$$40 \log (500/10) = 68 \text{ dB}$$

Pour un tel gabarit de filtre (en $D^4$), la courbe de réponse est donc bien meilleure que pour un gabarit de filtre procurant une courbe de réponse suivant la courbe 41.

Il est à noter que les calculs ayant permis de tracer ces trois courbes tiennent compte du gain d'antenne en fonction du site d'observation. Les données suivantes ont été respectées: ouverture de l'antenne à 3 dB en site de 10° et antenne placée à une hauteur de 1 mètre au-dessus du sol.

Le filtrage effectué permet d'augmenter la portée du dispositif selon l'invention, en évitant à la fois la saturation du convertisseur analogique/numérique et l'apparition d'un phénomène de masquage des échos lointains.

La partie déportée réalise le traitement du signal radar ainsi que le traitement de l'image radar servant à la navigation du robot mobile.

Cette partie déportée est constituée, selon l'invention, d'un rack comprenant plusieurs cartes de traitement:

– une unité centrale UNIX + disque dur + lecteur de disquettes
– une carte FFT

– une carte de commande

– deux cartes mémoire pour stocker la vidéo radar

– une carte graphique

– une console couleur permettant de visualiser les récurrences et dialoguer avec le système

– un clavier spécifique à l'application

L'onde émise étant modulée linéairement en fréquence, un traitement par démodulation d'une récurrence par sa réplique suivi d'une FFT sur toute la récurrence permet d'obtenir un écho à une fréquence proportionnelle au retard de celui-ci. Le résultat est ensuite mémorisé pour constituer l'image radar.

Les moyens de traitement délivrent ainsi une cartographie de l'environnement dans lequel se trouve le robot, en donnant pour chaque point de l'environnement observé un signal dont le niveau est représentatif de la surface équivalente radar du terrain ou des objets situés en ce point. A partir de cette image radar, l'utilisateur peut guider le robot pour qu'il évite les obstacles apparaissant à l'image et/ou pour qu'il se dirige vers un objectif précis. Le guidage peut également être effectué par liaison hertzienne, sur un canal différent de celui utilisé pour transmettre des données de la partie embarquée à la partie déportée.

Bien entendu, le guidage peut également être effectué différemment, par exemple par liaison optique.

Les données transférées par la partie embarquée correspondent à une distance et à un angle de circulaire (données polaires, repère à deux dimensions), ou alors à trois dimensions (distance, angle de circulation, angle d'élévation) et sont traitées par la partie déportée pour être converties en données orthogonales.

Selon l'invention, la résolution en distance du radar est indépendante de la distance à laquelle est détecté un obstacle, si bien que la distance aveugle du radar est égale à la résolution. Pour une largeur de bande de modulation de 75 MHz, la distance aveugle est donc de deux mètres. Cette faible distance aveugle permet une bonne précision de pilotage du robot. De plus, l'image de l'environnement étant remise à jour toutes les dix secondes, l'utilisateur dispose de données nouvelles rapidement, lui permettant de prévoir à l'avance les ordres de déplacement qu'il transmettra au robot.

Selon un autre mode de réalisation de la présente invention, le traitement des données par la partie déportée permet un autoguidage du robot. Le robot évite ainsi de lui-même les obstacles que le radar a détecté. L'utilisateur n'a plus de guidage à faire, mais seulement à donner au robot des données correspondant à l'objectif à atteindre.

Une autre caractéristique de la présente invention est que la forme d'onde continue a une puissance moyenne égale à la puissance crête, ce qui permet de travailler avec une faible puissance compatible avec de bonnes performances. Ainsi, la distance maximale de détection d'un obstacle est de l'ordre de 500 m (avec une résolution en distance de 2 m).

Le fait de déporter le traitement des données relatives à l'environnement du robot permet d'utiliser des algorithmes de traitement d'image puissants.

L'invention propose notamment d'utiliser un algorithme de recalage permettant de repositionner chaque image par rapport à une image par exemple précédemment enregistrée. Un algorithme de recalage peut se décomposer en plusieurs modules:

– prétraitement (obtention de l'image,...)

– segmentation (contours, régions,...)

– extraction de primitives et attributs associés

– mise en correspondance

– estimation des paramètres du modèle de déformation

– mise en coïncidence des images à recaler

La correspondance entre l'image radar reçue et l'image de référence est obtenue après des traitements spécifiques. L'image de référence est mise sous une forme compatible de l'image radar et ne dépend pas de la nature de la source (carte de type IGN, carte radar,...). Elle doit être conforme en résolution en distance et angulaire, en angle de visée.

Chaque image peut être décrite à plusieurs niveaux:

– primitive au niveau du point (niveau bas)

– primitive au niveau des contours

– primitive au niveau des régions

– primitive au niveau mixte des lignes/régions

– primitive au niveau des voisinages

– primitive au niveau du graphe (niveau haut)

A chaque niveau de description correspond respectivement un ensemble de méthodes de recalage:

– recalage par corrélation (mesure de la "distance" entre deux images: corrélation "normale", simplifiée, de phase (Transformée de Fourier Rapide), de "formes", statistique,...)

– recalage par relaxation probabiliste (étiquetage d'objets en se basant sur des probabilités initiales mises à jour par des contraintes propres au problème)
– recalage par prédiction et vérification d'hypothèses (prédictions locales, vérification globale)
– recalage par programmation dynamique (plus élastique que la corrélation car des écarts locaux sont tolérés, recherche de chemin optimal dans un graphe constitué des coordonnées des points des cartes restant après extraction de contours et seuil)
– recalage par graphe d'association (mise en correspondance de descriptions structurelles)
– recalage par mise en correspondance des contours (point à point après convolution et seuillage - segment à segment après approximation polygonale du contour - arc de cercle à arc de cercle après approximation curviligne)

L'utilisation d'algorithmes de traitement d'image permet d'assurer la fonction de positionnement précédemment décrite. Cette fonction nécessite bien entendu que l'environnement d'évolution du robot figure sur une carte ou a alors été précédemment enregistrée, afin que le dispositif de traitement puisse reconnaître l'environnement du robot.

La présente invention utilise de préférence un algorithme de traitement d'image permettant un recalage à partir de primitives d'un niveau relativement haut (détection de contours, seuillage, linéarisation des segments).

Le radar millimétrique pour guidage de robot au sol selon l'invention, allie à la fois la compacité et la légèreté nécessaire à son implantation sur l'engin mobile, et la puissance de calcul nécessaire au traitement du signal radar et aux calculs de guidage et de positionnement.

Les performances du radar sont peu dépendantes des conditions météorologiques et d'environnement (pluie, brouillard dense, nuit, épaisses fumées,...) si bien qu'il constitue un radar tout-temps. La gamme de fréquence utilisée par le radar correspond à une fenêtre dans la courbe d'absorption atmosphérique. La faible valeur de la longueur d'onde confère au radar selon l'invention une résolution angulaire élevée permettant de distinguer des objets de petite dimension, tout en conservant un encombrement réduit. Son encombrement est modéré et on obtient une bonne réponse des échos en ondes millimétriques.

Le radar millimétrique selon l'invention est particulièrement destiné aux sites inaccessibles ou dangereux pour la santé de l'homme. Il s'applique notamment aux sites sensibles (centrales nucléaires, usines toxiques, salles blanches,...) ou alors aux terrains encombrés d'obstacles tels que des champs de bataille, pour téléguider des engins d'attaque, pour le déminage ou encore pour la lutte contre les incendies.

Le robot est avantageusement un véhicule tout terrain équipé de roues et/ou de chenilles. Il peut être équipé de moyens de mesure, par exemple pour mesurer la radioactivité et/ou des moyens de préhension d'objets (bras téléscopique à pinces, bras de levage, pelle mécanique,...).

## Revendications

1. Dispositif de détection d'environnement, de positionnement et/ou de guidage d'un véhicule autonome mobile au sol du type comprenant d'une part des moyens de génération et d'émission d'un signal radar en onde millimétrique continue modulée en fréquence pouvant être réfléchi par un obstacle fixe, et d'autre part des moyens de réception, caractérisé en ce que lesdits moyens de réception comprennent des moyens analogiques (34) de correction de gain lui permettant de détecter simultanément des obstacles proches et des obstacles lointains.

2. Dispositif selon la revendication 1, caractérisé en ce que lesdits moyens (34) de correction de gain sont placés en amont des moyens de traitement du signal.

3. Dispositif selon la revendication 2, caractérisé en ce que les moyens de traitement du signal sont numériques et en ce que les moyens (34) de correction de gain sont placés en amont d'un échantillonneur (26) effectuant une conversion analogique-numérique.

4. Dispositif selon la revendication 3, caractérisé en ce que lesdits moyens (34) de correction de gain comportent un premier soustracteur (51) recevant d'une part le signal en provenance desdits moyens de réception et d'autre part ce même signal retardé d'un temps égal à la période d'échantillonnage dudit convertisseur analogique/numérique (26) un second soustracteur (53) recevant d'une part le signal de sortie dudit premier soustracteur (51) et d'autre part ce même signal retardé d'un temps égal à ladite période d'échantillonnage dudit convertisseur analogique/numérique (26), la sortie dudit second soustracteur (53) alimentant ledit convertisseur analogique/numérique (26).

5. Dispositif selon l'une des revendications 2 à 4, caractérisé en ce que les moyens d'émission et de réception émettent ou reçoivent leur signal au moyen d'un dispositif d'antennes rotatives en gisement sur 360°.

6. Dispositif selon la revendication 5, caractérisé en ce que le dispositif d'antenne rotative est constitué de deux antennes (20, 24) dont l'ouverture en élévation est d'environ 10°.

7. Dispositif selon la revendication 6, caractérisé en ce que l'ouverture en circulaire desdites antennes (20, 24) est d'environ 1,5°.

8. Dispositif selon l'une quelconque des revendications 6 et 7, caractérisé en ce que lesdites antennes (20, 24) sont de type "Pillbox" fixées l'une sur l'autre afin d'éviter des fuites d'émission.

9. Dispositif selon l'une quelconque des revendications 5 à 8, caractérisé en ce que ledit dispositif d'antenne rotative est fixé sur un plan situé le plus haut possible sur ledit véhicule autonome mobile notamment sur un bras télescopique.

10. Dispositif selon la revendication 1, caractérisé en ce que lesdits moyens de traitement sont déportés par rapport audit véhicule mobile et communiquent avec ledit véhicule par liaison hertzienne (32).

11. Dispositif selon la revendication 10, caractérisé en ce que ledit signal réfléchi est mémorisé et transmis auxdits moyens de traitement après chaque révolution complète dudit dispositif d'antenne rotative.

12. Dispositif selon l'une quelconque des revendications 1, 10 et 11, caractérisé en ce que lesdits moyens de traitement utilisent des algorithmes de traitement d'image délivrant une cartographie de l'environnement dans lequel se trouve ledit véhicule mobile autonome, en donnant pour chaque point de l'environnement observé un signal dont le niveau est représentatif de la surface équivalente radar du terrain ou des objets situés en ce point.

13. Dispositif selon la revendication 12, caractérisé en ce que lesdits algorithmes de traitement d'image permettent de visualiser les données provenant dudit véhicule mobile autonome sur un écran de visualisation sous forme d'un paysage en deux ou trois dimensions.

14. Dispositif selon l'une quelconque des revendications 12 et 13, caractérisé en ce que lesdits algorithmes de traitement d'image effectuent un recalage de l'image transmise par ledit véhicule mobile autonome avec une image précédemment enregistrée ou avec une carte géographique.

15. Dispositif selon la revendication 1, caractérisé en ce que ledit véhicule mobile autonome est télécommandé par liaison hertzienne.

16. Dispositif selon la revendication 1, caractérisé en ce que ledit véhicule autonome mobile au sol est un robot tout terrain équipé de roues et/ou de chenilles.

Fig. 1A

Fig. 1B

Fig. 1C

Fig. 2

Puissance (dB)

Fig. 3

Fig. 4

Fig. 5

## Fig. 6

## Fig. 7

**Office européen des brevets**

# RAPPORT DE RECHERCHE EUROPEENNE

Numero de la demande

EP 91 40 2836

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CONFERENCE PROCEEDINGS OF THE 18TH EUROPEAN MICROWAVE CONFERENCE, Stockholm, 12-15 septembre 1988, pages 826-830, Tunbridge Wells, GB; LANGE et al: "94 GHz imaging radar for autonomous vehicles" <br> * le document en entier * <br> --- | 1,5-7,13 | G01S13/93 <br> G05D1/02 |
| A | GB-A-2 053 516 (CHRISTOPHER) <br><br> * page 1, ligne 34 - page 2, ligne 2 * <br> * page 2, ligne 5 - ligne 16; figures 1,2 * <br> --- | 1,5,9, 15,16 | |
| A | US-A-4 370 652 (LUCCHI) <br> * colonne 2, ligne 51 - ligne 57 * <br> * colonne 3, ligne 10 - ligne 14 * <br> * colonne 3, ligne 20 - colonne 4, ligne 26; figures 1A,1B * <br> --- | 1-4 | |
| A | EP-A-0 139 292 (HITACHI) <br> * page 4, ligne 1 - ligne 20 * <br> * page 5, ligne 23 - page 7, ligne 7 * <br> * page 9, ligne 17 - page 11, ligne 22; figures 1-3 * <br> --- | 12-14 | |
| A | US-A-4 698 775 (KOCH ET AL) <br> * colonne 1, ligne 59 - colonne 2, ligne 60; figure 1 * <br> --- | 10 | **DOMAINES TECHNIQUES RECHERCHES (Int. Cl.5)** <br><br> G01S <br> G05D |
| A | US-A-4 876 554 (TUBBS) <br> * abrégé * <br><br> ----- | 8 | |

Le présent rapport a été établi pour toutes les revendications

| Lieu de la recherche | Date d'achèvement de la recherche | Examinateur |
|---|---|---|
| LA HAYE | 11 FEVRIER 1992 | HAFFNER R.D.R. |

| CATEGORIE DES DOCUMENTS CITES | |
|---|---|
| X : particulièrement pertinent à lui seul <br> Y : particulièrement pertinent en combinaison avec un autre document de la même catégorie <br> A : arrière-plan technologique <br> O : divulgation non-écrite <br> P : document intercalaire | T : théorie ou principe à la base de l'invention <br> E : document de brevet antérieur, mais publié à la date de dépôt ou après cette date <br> D : cité dans la demande <br> L : cité pour d'autres raisons <br> .................................................................... <br> & : membre de la même famille, document correspondant |

EPO FORM 1503 03.82 (P0402)

17